Europäisches Patentamt

European Patent Office

Office européen des brevets

(11) Publication number: **0 319 488**
A1

# (12) EUROPEAN PATENT APPLICATION

(21) Application number: 88830501.8

(22) Date of filing: 22.11.88

(51) Int. Cl.⁴: **B 60 S 1/32**
B 60 S 1/38

(30) Priority: 30.11.87 IT 6802687

(43) Date of publication of application:
07.06.89 Bulletin 89/23

(84) Designated Contracting States:
DE ES FR GB IT SE

(71) Applicant: INDUSTRIE MAGNETI MARELLI S.r.l.
Via Adriano 81
I-20128 Milano (IT)

(72) Inventor: Molari, Aurelio
Via Cantu 11 c/o Ind. Magneti Marelli
I-20092 Cinisello Balsamo (IT)

(74) Representative: Buzzi, Franco et al
c/o Jacobacci-Casetta & Perani S.p.A. Via Alfieri, 17
I-10121 Torino (IT)

(54) A windscreen wiper device for motor vehicles.

(57) A windscreen wiper device for motor vehicles includes a wiper arm (2) driven in a reciprocating rotary motion by motor-driven operating means (4) and carrying a wiper blade unit (5) comprising a main portion (7) and a secondary articulated end portion (11) which can be displaced with a reciprocating rotary motion, by means of a connecting rod and crank transmission (19,21), between positions of minimum and maximum extension fo the wiper arm (2) during the reciprocating rotary motion thereof.

FIG. 1

EP 0 319 488 A1

**Description**

### A windscreen wiper device for motor vehicles

The present invention relates to windscreen wiper devices for motor vehicles, of the type comprising a wiper arm, a wiper blade unit carried by the wiper arm, and motor-driven operating means operatively associated with the wiper arm for moving the wiper arm with a reciprocating rotary motion.

In known windscreen wiper devices of this type, and particularly in those which use a single wiper arm articulated in correspondence with the centre of the surface to be wiped, there is the problem of extending as far as possible the area swept by the windscreen wiper blade unit during the oscillation of the wiper arm.

In order to solve this problem, various systems have been proposed which normally consist of the reciprocating rectilinear displacement of the wiper arm during its oscillation, so as to extend the area wiped to regions which would otherwise not be swept during the normal stroke of the blade unit in a circular arc.

These solutions involve the general disadvantage that they are structurally complicated and expensive, particularly because of the need to provide the wiper arm with a telescopic structure or to use complex mechanisms for operating the arm itself.

The object of the present invention is to avoid the above problem and to produce a windscreen wiper device for motor vehicles of the type defined above, which enables the area wiped to be extended in a structurally simple and cheap manner.

In order to achieve this object, the subject of the invention is a windscreen wiper device for motor vehicles, of the type described at the beginning, characterised in that the wiper blade unit includes a main portion and a secondary articulated end portion which is situated at the opposite end of the wiper arm to the motor-driven operating means and is supported by the wiper arm so that it can pivot about an axis parallel to the axis of rotation of the wiper arm between positions of maximum extension of the wiper arm, in which it is aligned with the main portion of the blade unit, and of minimum extension of the wiper arm, in which it is inclined to the main portion of the blade unit, and in that it includes a connecting rod and crank transmission which interconnects the motor-driven operating means and the secondary portion of the blade unit to cause its reciprocating rotary displacement between the positions of minimum and maximum extension during the reciprocating rotary motion of the wiper arm.

The arrangement of the windscreen wiper unit according to the invention is such that the secondary portion of the blade unit is arranged in the least extended position in correspondence with the initial, central and final sections of the angular stroke of the arm, and in the most extended position in correspondence with the regions intermediate in the central region and the initial and final regions of the stroke. This enables the swept area of the surface to be wiped to be extended effectively in these intermediate regions which, in the case, for example, of application to the windscreen of a motor vehicle, are well known to be the most critical for visual purposes.

The secondary portion of the wiper blade unit is preferably supported by the wiper arm essentially as an extension of the main portion by means of a pivoting arm connected to the connecting rod of the transmission.

The invention will now be described in detail with reference to the appended drawings, provided purely by way of non-limiting example, in which:

Figure 1 is a schematic perspective view of a windscreen wiper device for motor vehicles according to the invention,

Figure 2 is a diagrammatic view which shows schematically the configuration of the windscreen wiper device during its wiping motion,

Figure 3 is an elevational view from below, taken on the arrow III of Figure 1 on an enlarged scale,

Figure 4 is an elevational view from below, taken on the arrow IV of Figure 3,

Figure 5 is a partially sectioned view taken on the line V-V of Figure 1, on an enlarged scale, and

Figures 6 and 7 are two diagrammatic views which show the windscreen wiper device in greater detail in two of the positions shown in Figure 2.

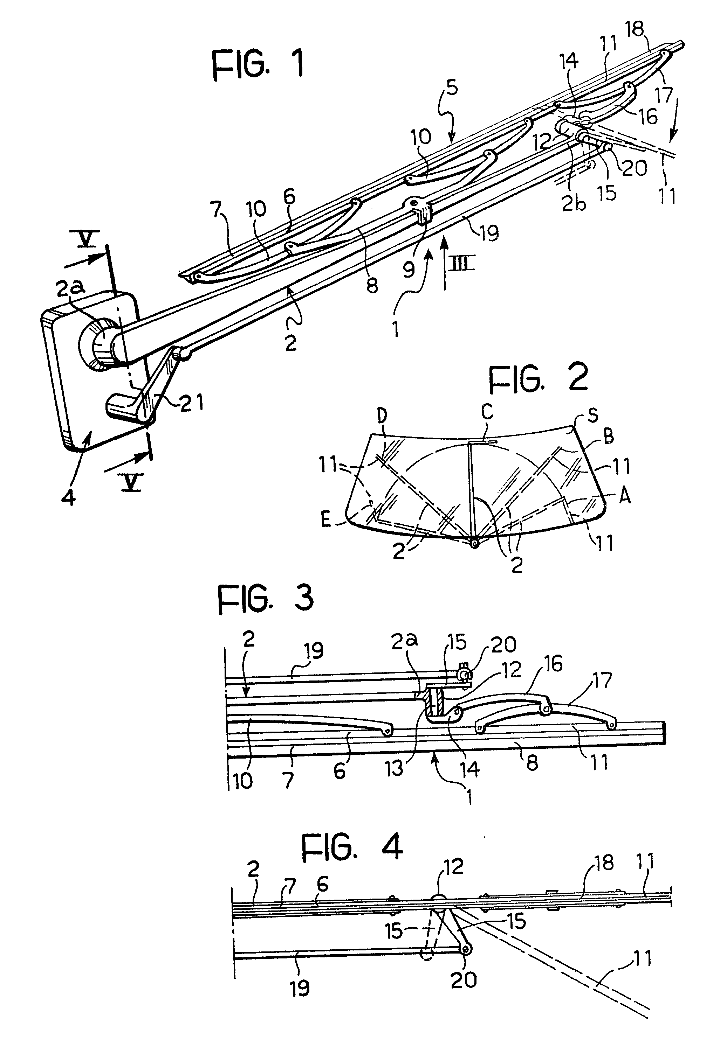

With reference initially to Figures 1, 3 and 4, a windscreen wiper device for motor vehicles according to the invention is generally indicated 1. It should be noted that, although the embodiment illustrated relates to a windscreen wiper of the type with one arm, the invention can be applied equally to windscreen wiper devices with several arms.

The device 1 essentially includes a wiper arm 2, one end 2a of which is articulated to the structure of a vehicle below the central region of a surface to be wiped, for example a windscreen, indicated S in Figures 2, 6 and 7.

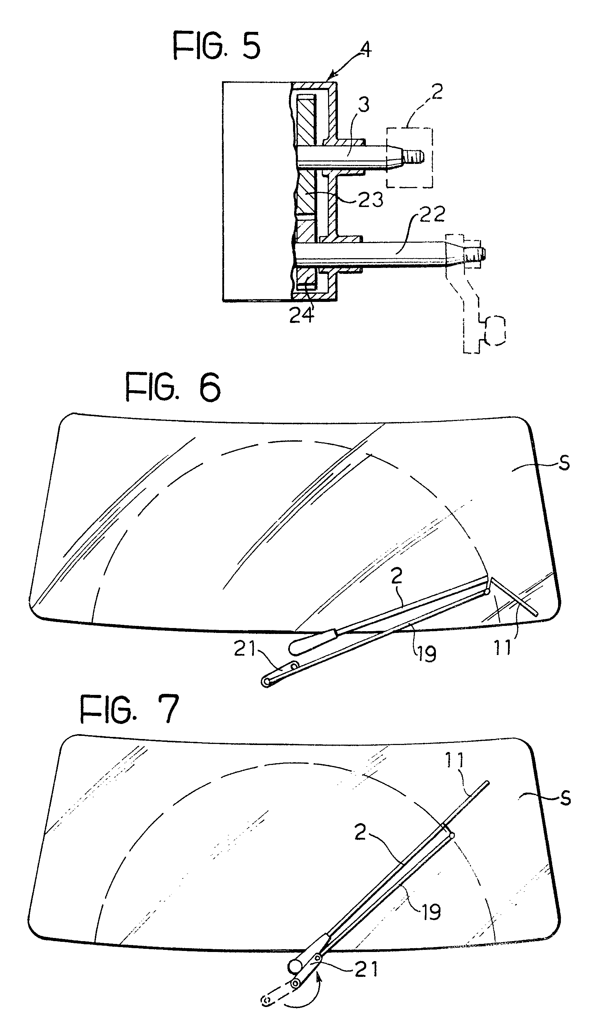

The end 2a of the wiper arm 2 is mounted in known manner on a pin, indicated 3 in Figure 5, associated with a motor-driven operating unit, generally indicated 4. This operating unit 4 includes, in known manner, an electric motor and a connecting rod and crank mechanism for driving the pin 3, and hence the wiper arm 2, in a reciprocating rotary motion to sweep the surface S. In the embodiment illustrated, the sweeping covers an arc whose angular extent is a little less than 180°.

A windscreen wiper blade unit is fitted to the wiper arm 2 and is generally indicated 5. This blade unit 5 includes a main portion 6 with a wiper blade 7 of elastomeric material which is connected in conventional manner to the arm 2. In the embodiment illustrated, this connection is achieved by means of a primary bow 8 fixed at 9 to the arm 2, and a pair of secondary bows 10 carrying the portion 6 of the blade unit.

According to the invention, the blade unit 5 also includes a secondary portion 11 supported in an articulated manner by the opposite end 2b of the arm 2 to the operating mechanism 4, essentially as an extension of the main portion 6. In effect, the end 2a of the arm 2 has a tubular end part 12 which rotatably supports a pin 13 parallel to the pin 3, to the ends of which two arms 14 and 15 are fixed. The arm 14 is articulated to a half-bow 16 which is in turn articulated to a bow 17 carrying the secondary portion 11 of the blade unit 5 which is provided with a wiper blade 18 of elastomeric material similar to the blade 7 of the main portion 6 and arranged as an extension thereof.

A connecting rod 19, which is articulated by means of a ball joint 20 to the arm 15, extends adjacent the arm 2 and is connected to a crank 21 mounted on a pin 22 parallel to the pin 3 and operatively associated with the motor-driven operating mechanism 4. In effect, the pin 22 is driven directly by the pin 3 by means of directly-meshed gears 23, 24, as illustrated in Figure 5,

By virtue of the configuration described above, during the reciprocating rotary motion of the wiper arm 2, the secondary portion 11 of the blade unit 5 is also driven in a reciprocating rotary motion, in the manner described below with reference to Figures 2, 6 and 7.

Figure 2 shows five successive positions of the wiper arm 2 during its stroke of wiping of the surface S: starting from the right of this drawing, the positions are indicated as follows:

A - initial starting position
B - first intermediate position
C - central position
D - second intermediate position
E - final position.

In the initial position A, the windscreen wiper blade unit 5 is in its least extended configuration in which the secondary portion 11 is at an angle of approximately 90° to the main portion 6 and thus to the arm 2. In this position, shown in great detail in Figure 6, the crank 21 extends essentially parallel and in the opposite direction to the wiper arm 2.

As the wiper arm 2 moves from the initial position A to the first intermediate position B, the crank 21 rotates in the opposite direction to the arm 2, causing the secondary portion 11 to pivot into the position of maximum extension of the blade unit 5, in which the secondary portion 11 is aligned substantially parallel to the main portion 6. In this position, shown in greater detail in Figure 7, the crank 21 extends parallel to and in the same direction as the wiper arm 2.

As the arm 2 continues to rotate from the first intermediate position B to the central position C, the crank 21 causes the progressive return of the secondary portion 11 towards its initial configuration so that, in the central position C, this secondary portion 11 is once again at an angle to the main portion 6, as in the starting position A.

Upon the futher rotation of the arm 2 towards the second intermediate position D, the secondary portion 11 is again pivoted until it is arranged substantially in alignment with the main portion 6 and, in the final position E, is returned to the bent configuration of the initial position A and the central position C.

During the return of the arm 2 from the final position E to the initial position A, the crank 21 and the connecting rod 19 impart to the secondary portion 11 the same movements as described above.

It is clear from the above that the conformation of the windscreen wiper device 1 enables the area swept by the blade unit 5 in the upper side regions of the surface S to be extended appreciably, so as considerably to improve the field of vision.

**Claims**

1. A windscreen wiper device for motor vehicles, comprising a wiper arm, a wiper blade unit carried by the wiper arm, and motor-driven operating means operatively associated with the wiper arm for moving the wiper arm with a reciprocating rotary motion, characterised in that the wiper blade unit (5) includes a main portion (7) and a secondary articulated end portion (11) which is situated at the opposite end (2b) of the wiper arm (2) to the motor-driven operating means (4) and is supported by the wiper arm (2) so that it can pivot about an axis (13) parallel to the axis of rotation (3) of the wiper arm (2) between positions of maximum extension of the wiper arm (2), in which it is aligned with the main portion (6) of the wiper blade unit (5), and of minimum extension of the wiper arm (2), in which it is inclined to the main portion (6) of the wiper blade unit (5), and in that it includes a connecting rod and crank transmission (19, 21) which interconnects the motor-driven operating means (4) and the secondary portion (11) of the wiper blade unit (5) to cause its reciprocating rotary displacement between the positions of maximum and minimum extension during the reciprocating rotary motion of the wiper arm (2).

2. A windscreen wiper device according ot Claim 1, characterised in that the secondary portion (11) of the wiper blade unit (5) is supported by the wiper arm (2) as an extension of the main portion (6) of the blade unit (5) by means of a pivoting arm (15) articulated to the connecting rod (19) of the transmission (19, 21).

3. A windscreen wiper device according to Claim 1 or Claim 2, characterised in that the crank (21) of the transmission (19, 21) is driven by the wiper arm (2) through a pair of gears (23, 24).

FIG. 1

FIG. 2

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | US-A-2 644 187 (J.P. LACY) <br> * Whole abstract * <br> --- | 1 | B 60 S 1/32 <br> B 60 S 1/38 |
| Y | FR-A-2 541 641 (EQUIPEMENTS AUTOMOBILES MARCHAL) <br> * Page 9, line 11 - page 11, line 33; figure 1 * | 1 | |
| A | | 2,3 | |
| | --- | | |
| A | CH-A- 525 789 (J. MENZI) <br> * Whole document * <br> --- | 1,2 | |
| A | BE-A- 902 964 (LEROY et al.) <br> * Page 5, lines 16-31; figures 1-3 * <br> --- | 3 | |
| A | FR-A-2 514 714 (HONDA GIKEN KOGYO K.K.) <br> * Page 5, line 22 - page 6, line 10; figures 1-3 * <br> ------ | 1,2 | |
| | | | TECHNICAL FIELDS SEARCHED (Int. Cl.4) |
| | | | B 60 S |

The present search report has been drawn up for all claims

| Place of search | Date of completion of the search | Examiner |
|---|---|---|
| THE HAGUE | 08-03-1989 | VERLEYE J. |